# EUROPEAN PATENT SPECIFICATION

(11) **EP 3 524 662 B1**
(45) Date of publication and mention of the grant of the patent: **29.11.2023**
(21) Application number: 17858536.0
(22) Date of filing: 06.10.2017
(51) Int. Cl.: C10M 127/04, C10M 107/34, C10M 107/24, C10M 107/02, C10M 105/38, C10M 105/06, C10M 101/02, G01M 3/20, C10M 169/04, C09K 5/04, C10N 20/00, C10N 20/02, C10N 40/30

(54) **LUBRICANT COMPOSITION, COMPOSITION FOR REFRIGERATING MACHINES, AND METHOD FOR DETECTING LEAKAGE POINT**
SCHMIERMITTELZUSAMMENSETZUNG, ZUSAMMENSETZUNG FÜR KÄLTEMASCHINEN UND VERFAHREN ZUR DETEKTION EINER LECKAGE
COMPOSITION LUBRIFIANTE, COMPOSITION POUR MACHINES FRIGORIFIQUES, ET PROCÉDÉ DE DÉTECTION DE POINT DE FUITE

(30) Priority: 06.10.2016 JP 2016197933
(43) Date of publication of application: 14.08.2019
(73) Proprietor: Idemitsu Kosan Co.,Ltd., Chiyoda-ku Tokyo 100-8321 (JP)
(72) Inventor: KANEKO, Masato, Ichihara-shi Chiba 299-0107 (JP)
(74) Representative: Hoffmann Eitle
(86) International application number: PCT/JP2017/036513
(87) International publication number: WO 2018/066700

(56) References cited:
- EP-A1- 2 166 040
- EP-A1- 2 832 835
- WO-A1-2005/047843
- DE-A1-102014 103 783
- GB-A- 419 062
- JP-A- S61 211 391
- JP-A- S63 214 633
- JP-A- 2001 348 589
- JP-A- 2007 511 645
- US-A- 4 758 366
- US-A1- 2002 002 121
- US-A1- 2005 145 822

## Description

### Technical Field

The present invention relates to a lubricant composition, a composition for refrigerating machines, and a method of detecting a leakage point.

### Background Art

Hitherto, measures for specifying a leakage point of a fluid circulating within an apparatus of every sort, such as an air conditioning system and a cooling system (a refrigerant in the case of an air conditioning system or a cooling system), have been demanded.

As the measure for specifying a leakage point, a method for discriminating the presence or absence of an air bubble by spraying soapy water on a piping or a joint is proposed.

In addition, a leakage detection method using a fluorescent agent is also developed, and in a refrigeration system for automobile air conditioner, one in which a fluorescent agent for detecting refrigerant leakage is contained within a receiver drier is proposed, too.

As lubricant compositions regarding the leakage detection using a fluorescent agent, for example, technologies of PTLs 1 to 10 are proposed.

### Citation List

### Patent Literature

PTL 1: JP H11-335690 A
PTL 2: JP 2006-52938 A
PTL 3: JP S61-211391 A
PTL 4: JP 2006-291112 A
PTL 5: JP 2015-510002 A
PTL 6: JP 2014-517859 A
PTL 7: JP 2015-506402 A
PTL 8: JP 2013-209590 A
PTL 9: JP 2013-209591 A
PTL 10: JP 2013-209592 A

### Summary of Invention

### Technical Problem

But, the lubricant compositions containing a fluorescent agent were occasionally not satisfactory in thermal stability and chemical stability.

For example, refrigerants which have been conventionally used in the air conditioning system or cooling system affect the global warming, and therefore, as novel refrigerants with a global warming potential (GWP), a refrigerant having an unsaturated bond in a molecule thereof (e.g., an R1234yf refrigerant) and a refrigerant having a low global warming potential and capable of miniaturizing the system capacity are investigated. On investigating such a lubricant composition for refrigerant with a low global warming potential, it was confirmed by the present inventor that the lubricant composition containing a fluorescent agent is unsatisfactory in thermal stability and chemical stability.

However, in the lubricant compositions containing a fluorescent agent of PTLs 1 to 7, the thermal stability and chemical stability are not investigated at all.

In the lubricant compositions containing a fluorescent agent of PTLs 8 to 10, though the thermal stability and chemical stability are a subject, satisfactory thermal stability and chemical stability could not be given.

In view of the foregoing problems, the present invention has been made, and a problem thereof is to provide a composition for refrigerating machines comprising an refrigerant and a lubricant composition which is excellent in thermal stability and chemical stability over a long period of time while making it possible to detect a leakage point of the lubricant composition, etc. with a fluorescent agent.

### Solution to Problem

The present invention is disclosed in and by the appended claims.

### Advantageous Effects of Invention

In accordance with the present invention, a lubricant composition which is excellent in thermal stability and chemical stability over a long period of time while making it possible to detect a leakage point of the lubricant composition, etc. with a fluorescent agent, can be provided. In addition, in accordance with the present invention, a method of easily detecting a leakage point of a lubricant composition, etc.

### Description of Embodiments

### <Lubricant composition>

A lubricant composition of the present embodiment is one containing a base oil (A) and a fluorescent fused ring compound (B) not having nitrogen, oxygen, and sulfur in a molecule thereof while having a tri- or higher fused ring, wherein the fused ring compound (B) is contained in an amount of 0.001 to 1.0% by mass on a basis of the whole amount of the lubricant composition.

The lubricant composition used according to the invention is as defined in and by the appended claims.

### [Base Oil (A)]

As the base oil, mineral oils and various synthetic oils can be used without being particularly limited. As the synthetic oil, a polyalkylene glycol, a polyvinyl ether, a polyol ester, an alkylbenzene, and a poly-α-olefin are suitably used.

According to the invention the base oil is a polyvinyl ether, and a polyol ester. In particular, a polyvinyl ether is suitable from the viewpoints of chemical stability and thermal stability.

Examples of the mineral oil include a paraffin-based mineral oil, an intermediate-based mineral oil, and a naphthene-based mineral oil, each of which is obtained by an ordinary refining method, such as solvent refining and hydrogenation refining; and a wax isomerized oil, which is produced through isomerization of a wax, such as a wax produced by the Fischer-Tropsch process or the like (gas-to-liquid wax), and a mineral oil-based wax. The mineral oil is preferably one classified into Group 3 in the base oil category according to The American Petroleum Institute.

Examples of the polyalkylene glycol include a compound represented by the following general formula (1).

R¹-[(OR2)ₘ₁-OR³]ₙ₁ (1)

In the formula (1), R¹ represents a hydrogen atom, an alkyl group having 1 to 10 carbon atoms, an acyl group having 2 to 10 carbon atoms, or an aliphatic hydrocarbon group having 2 to 6 bonding sites and having 1 to 10 carbon atoms; R² represents an alkylene group having 2 to 4 carbon atoms; R³ represents a hydrogen atom, an alkyl group having 1 to 10 carbon atoms, or an acyl group having 2 to 10 carbon atoms; n1 represents an integer of 1 to 6; and m1 is a number such that an average value of (m1 × n1) is 6 to 80.

Specific examples of the polyalkylene glycol include polypropylene glycol, polyethylene glycol dimethyl ether, and polypropylene glycol dimethyl ether.

Examples of the polyvinyl ether include a homopolymer of a single vinyl ether monomer, a copolymer of two or more vinyl ether monomers, and a copolymer of a vinyl ether monomer and a hydrocarbon monomer having an olefinically double bond.

Examples of the vinyl ether monomer include vinyl methyl ether, vinyl ethyl ether, vinyl-n-propyl ether, and vinyl isopropyl ether.

Examples of the hydrocarbon monomer having an olefinically double bond include ethylene, propylene, various butenes, various pentenes, various hexenes, various hexenes, various heptenes, various octenes, diisobutylene, triisobutylene, styrene, α-methylstyrene, and various alkyl-substituted styrenes.

Specific examples of the polyvinyl ether include polyethyl polybutyl vinyl ether, polyethyl vinyl ether, and polymethyl vinyl ether.

As the polyol ester, an ester of a diol or a polyol having 3 to 20 hydroxy groups with a fatty acid having 1 to 24 carbon atoms is preferably used.

Of the diol and the polyol, each of which is a raw material of the polyol ester, from the viewpoint of hydrolysis stability, the polyol is preferred, and neopentyl glycol, trimethylolethane, trimethylolpropane, trimethylolbutane, and pentaerythritol are more preferred. Furthermore, in the case where the lubricant composition contains a refrigerant, pentaerythritol is suitable from the viewpoint of compatibility with the refrigerant.

As the fatty acid that is a raw material of the polyol ester, from the standpoint of lubricity, one having 3 or more carbon atoms is preferred, one having 4 or more carbon atoms is more preferred, one having 5 or more carbon atoms is still more preferred, and one having 10 or more carbon atoms is yet still more preferred. In addition, in the case where the lubricant composition contains a refrigerant, from the viewpoint of compatibility with the refrigerant, one having 18 or less carbon atoms is preferred, one having 12 or less carbon atoms is more preferred, and one having 9 or less carbon atoms is still more preferred.

The fatty acid may be either a linear fatty acid or a branched fatty acid, and from the viewpoint of lubricity, a linear fatty acid is preferred, whereas from the viewpoint of hydrolysis stability, a branched fatty acid is preferred. In addition, the fatty acid may be either a saturated fatty acid or an unsaturated fatty acid.

Examples of the fatty acid include linear or branched fatty acids, such as isobutyric acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, and oleic acid; and so-called neo acids in which an α-carbon atom is quaternary.

Specific examples of the polyol ester include a diester of neopentyl glycol with 2-methylpentanoic acid, a triester of trimethylolpropane with 3,5,5-trimethylhexanoic acid, a tetraester of pentaerythritol with 2-ethylbutanoic acid, a tetraester of pentaerythritol with n-pentanoic acid and 2-ethylhexanoic acid, a tetraester of pentaerythritol with 2-methylhexanoic acid and 3,5,5-trimethylhexanoic acid, a tetraester of pentaerythritol with 2-ethylhexanoic acid, a tetraester of pentaerythritol with 3,5,5-trimethylhexanoic acid, a hexaester of dipentaerythritol with 2-methylbutanoic acid, a hexaester of dipentaerythritol with 2-methylpentanoic acid, and a hexaester of dipentaerythritol with 2-ethylehxanoic acid.

The alkylbenzene is preferably an alkylbenzene in which a total carbon number of the alkyl group is 20 or more. In addition, though the number of the alkyl group of the alkylbenzene may be one, from the viewpoint of thermal stability, the alkylbenzene preferably has two or more alkyl groups. In the case where the alkylbenzene has two or more alkyl groups, the aforementioned total carbon number of the alkyl group means a sum total of carbon numbers of all of alkyl groups.

As for the poly-α-olefin, though various compounds are usable, polymers of an α-olefin having 8 to 18 carbon atoms are preferably used. In addition, among the polymers of an α-olefin having 8 to 18 carbon atoms, a polymer of 1-dodecene, 1-decene, or 1-octene is suitable from the viewpoints of thermal stability and lubricity.

From the viewpoint of thermal stability, the poly-α-olefin is preferably a hydrogenation-treated material of a poly-α-olefin.

A weight average molecular weight (Mw) of the aforementioned various synthetic oils as expressed in terms of polystyrene is preferably less than 5,000, more preferably 200 to 3,000, and more preferably 250 to 2,000.

A 100°C kinetic viscosity of the base oil is preferably 0.1 mm²/s or more and 50 mm²/s or less, more preferably 1 mm²/s or more and 30 mm²/s or less, and still more preferably 3 mm²/s or more and 20 mm²/s or less.

A 40°C kinetic viscosity of the base oil is preferably 1 mm²/s or more and 250 mm²/s or less, more preferably 10 mm²/s or more and 150 mm²/s or less, and still more preferably 30 mm²/s or more and 80 mm²/s or less.

A viscosity index of the base oil is preferably 60 or more, more preferably 80 or more, and still more preferably 100 or more.

The kinetic viscosity at 40°C, the kinetic viscosity at 100°C, and the viscosity index are measured in conformity with JIS K2283:2000.

The content of the base oil (A) is preferably 90 to 99% by mass, more preferably 92 to 99% by mass, and still more preferably 93 to 98% by mass on a basis of the whole amount of the lubricant composition.

### [Fused Ring Compound (B)]

In the lubricant composition of the present embodiment, a fused ring compound (B) being fluorescent, having a tri- or higher fused ring, and not having nitrogen, oxygen, and sulfur in a molecule thereof is used, selected from a naphthacene-based compound and an anthracene-based compound.

In the present embodiment, the wording "fluorescent" refers to properties such that on receiving irradiation of a ultraviolet ray or a visible light ray, light in a visible light region is emitted. The fused ring compound (B) may be either colorless or colored during non-light emission.

In the case where nitrogen, oxygen, and sulfur are contained in the molecule of the fluorescent compound, the fluorescent compound is liable to react with the base oil, and the fluorescent compound and the base oil cause a change in quality, whereby not only discoloration of the lubricant composition, an increase of the acid number, and formation of sludge are brought, but also a metal within an apparatus is corroded. In particular, the polyalkylene glycol and the polyol ester, both of which are useful as the synthetic oil, are liable to react with the fluorescent compound containing nitrogen, oxygen, and sulfur in a molecule thereof. In addition, originally, a fluorescent compound itself, which contains nitrogen, oxygen, and sulfur in a molecule thereof, is liable to be degraded (changed in quality or decomposed) with time even when not reacting with the base oil, and therefore, a fluorescent performance is impaired with time, thereby adversely affecting the detection of a leakage point of the lubricant composition.

On the other hand, in view of the fact that the fused ring compound (B) as the fluorescent compound which is used in the present embodiment does not have nitrogen, oxygen, and sulfur in a molecule thereof, the reaction with the base oil is suppressed, and therefore, the lubricant composition is excellent in thermal stability and chemical stability, and degradation (change in quality or decomposition) with time of the lubricant composition can be suppressed. In addition, the fused ring compound (B) itself as the fluorescent compound which is used in the present embodiment is hardly degraded (changed in quality or decomposed) with time. That is, the lubricant composition of the present embodiment is not only able to suppress discoloration with time, an increase of acid number, formation of sludge, and metal corrosion within an apparatus but also capable of suppressing degradation with time of a fluorescent performance.

The lubricant composition of the present embodiment contains the fused ring compound (B) in an amount of 0.001 to 1.0% by mass on a basis of the whole amount of the lubricant composition.

In the case where the content of the fused ring compound (B) is less than 0.001% by mass, it becomes difficult to detect a leakage point of the lubricant composition. In addition, in the case where the content of the fused ring compound (B) is more than 1.0% by mass, there is a case where the fused ring compound (B) cannot be dissolved in the lubricant composition, and there is a possibility that the lubricity and the like are adversely affected. In addition, even when the content of the fused ring compound (B) is more than 1.0% by mass, an improvement of detection accuracy of a leakage point of the lubricant composition cannot be expected.

The content of the fused ring compound (B) is preferably 0.001 to 0.8% by mass on a basis of the whole amount of the lubricant composition, more preferably 0.001 to 0.5% by mass on a basis of the whole amount of the lubricant composition, still more preferably 0.002 to 0.2% by mass on a basis of the whole amount of the lubricant composition, and yet still more preferably 0.002 to 0.1% by mass on a basis of the whole amount of the lubricant composition.

The fused ring compound (B) may be one having a substituent so long as it is satisfied with a condition that it does not have nitrogen, oxygen, and sulfur in a molecule thereof while having a tri- or higher fused ring. The substituent is preferably a hydrocarbon group, such as an alkyl group and an aryl group, and more preferably an aryl group. In this specification, it should be construed that the aryl group includes not only a simple aromatic ring but also a polycyclic aromatic hydrocarbon group, such as naphthyl.

By using the fused ring compound (B) having such a substituent, a lubricant composition which is more excellent in thermal stability and chemical stability can be provided.

Examples of the fused ring compound (B) include a perylene-based compound, not according to present invention, a naphthacene-based compound, and an anthracene-based compound.

Examples of the perylene-based compound include perylene represented by the following general formula (2) and a compound having a substituent in perylene. Examples of the substituent include hydrocarbon groups, such as an alkyl group and an aryl group.

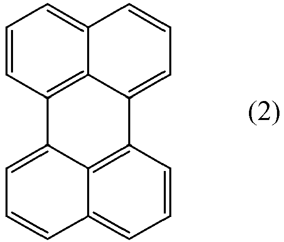

From the viewpoint of suppressing worsening of solubility in the base oil and lubricity, the perylene-based compound is preferably a perylene having an alkyl group or an aryl group as the substituent, and more preferably a perylene having an aryl group as the substituent.

Specific examples of the perylene having a substituent include 2,3,10,11-tetramethylperylene, 3-methylperylene, 3,7-dipropylperylene, 2,5,7,10-tetraphenylperylene, and 3,9-bis(2-naphthyl)perylene.

Examples of the naphthacene-based compound include naphthacene represented by the following general formula (3) and a compound having a substituent in naphthacene. Examples of the substituent include hydrocarbon groups, such as an alkyl group and an aryl group.

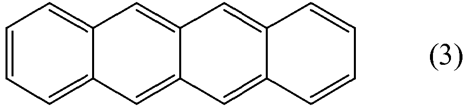

From the viewpoint of suppressing worsening of solubility in the base oil and lubricity, the naphthacene-based compound is preferably a naphthacene having an alkyl group or an aryl group as the substituent, and more preferably a naphthacene having an aryl group as the substituent.

Specific examples of the naphthacene having a substituent include 5,6,11,12-tetraphenylnaphthacene, 1-methylnaphthacene, and 2,9-dioctylnaphthacene. Of these, 5,6,11,12-tetraphenylnaphthacene is preferred.

Examples of the anthracene-based compound include anthracene represented by the following general formula (4) and a compound having a substituent in anthracene. Examples of the substituent include hydrocarbon groups, such as an alkyl group and an aryl group.

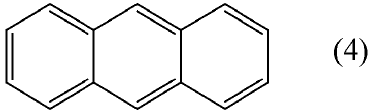

From the viewpoint of suppressing worsening of solubility in the base oil and lubricity, the anthracene-based compound is preferably an anthracene having an alkyl group or an aryl group as the substituent, and more preferably an anthracene having an aryl group as the substituent.

Specific examples of the anthracene having a substituent include 9-phenylanthracene, 9,10-diphenylanthracene, 9-9'-bianthracene, 9-methylanthracene, and 2-ethylanthracene. Of these, any of 9-phenylanthracene, 9,10-diphenylanthracene, and 9-9'-bianthracene are preferred.

Although the lubricant composition of the present embodiment may contain other fluorescent compound than the fused ring compound (B) (hereinafter sometimes referred to as "other fluorescent compound"), it is preferred that the content thereof is a minute amount. Specifically, the content of the other fluorescent compound is preferably less than 0.1% by mass, more preferably less than 0.05% by mass, still more preferably less than 0.01% by mass, and yet still more preferably less than 0.005% by mass on a basis of the whole amount of the lubricant composition.

### [Coloring Agent]

The lubricant composition of the present embodiment may further contain a coloring agent. By containing the coloring agent in the lubricant composition, the lubricant composition can be regulated to a desired color, and even when the fused ring compound (B) is colorless during non-light emission, whether or not the fused ring compound (B) is contained in the lubricant composition can be readily distinguished. In addition, by synthesizing an emission color of the fused ring compound (B) with a color of the coloring agent, the lubricant composition can be regulated to a color that is readily perceived by human eyes in a dark place. The color that is readily perceived by human eyes in a dark place is in a range in color from purple to blue to green to yellow. A color from orange to red is hardly perceived by human eyes in a dark place.

Although the color of the coloring agent is not limited, from the viewpoint of making it easy to perceive the presence or absence of light emission of the fused ring compound (B), the color of the coloring agent is preferably a color of non-dark color series, such as yellow, green, red, and blue.

From the viewpoint of making it easy to maintain various performances, such as lubricity, a dye is suitably used.

Examples of the dye include an azo-based dye, a xanthene-based dye, a quinoline-based dye, a triphenylmethane-based dye, and an anthraquinone-based dye. In addition, as the dye, a dye that is the other fluorescent compound and which is colored during non-light emission (fluorescent coloring dye) can also be used. Of these dyes, oil-soluble dyes are suitable from the viewpoint of making it easy to maintain various performances, such as lubricity.

Specific examples of the oil-soluble dye include Solvent Yellow 116 (yellow), Solvent Green 20 (green), Solvent Blue 35 (blue), and Solvent Red 207 (red).

The content of the coloring agent is preferably 0.0001% by mass to 0.1% by mass on a basis of the whole amount of the lubricant composition, more preferably 0.0001 to 0.05% by mass on a basis of the whole amount of the lubricant composition, and still more preferably 0.0002 to 0.02% by mass on a basis of the whole amount of the lubricant composition.

### [Additives]

The lubricant composition contain at least one selected from additives consisting of an antioxidant, an extreme pressure agent, an acid scavenger, an oxygen scavenger, and a copper deactivator. The content of each of the additives is typically 0.01 to 5% by mass, and preferably 0.05 to 3% by mass relative to the whole amount of the lubricant composition.

Examples of the antioxidant include phenol-based antioxidants, such as 2,6-di-tert-butyl-4-methylphenol (DBPC), 2,6-di-tert-butyl-4-ethylphenol, and 2,2'-methylenebis(4-methyl-6-tert-butylphenol); and amine-based antioxidants, such as phenyl-α-naphthylamine and N,N'-di-phenyl-p-phenylenediamine.

Examples of the extreme pressure agent include phosphorus-based extreme pressure agents, such as a phosphoric acid ester, an acidic phosphoric acid ester, a phosphorous acid ester, an acidic phosphorous acid ester, and amine salts thereof; sulfur-based extreme pressure agents, such as a sulfurized fat or fatty oil, a sulfurized fatty acid, and a sulfurized ester; and fatty acid metal salts having 3 to 60 carbon atoms.

Examples of the acid scavenger include epoxy compounds, such as phenyl glycidyl ether, an alkyl glycidyl ether, an alkylene glycol glycidyl ether, a glycidyl ester, cyclohexene oxide, an α-olefin oxide, and epoxidized soybean oil.

Examples of the oxygen scavenger include sulfur-containing aromatic compounds, such as 4,4'-thiobis(3-methyl-6-t-butylphenol), diphenyl sulfide, dioctyldiphenyl sulfide, a dialkyldiphenylene sulfide, benzothiophene, dibenzothiophene, phenothiazine, benzothiapyrane, thiapyrane, thianthrene, dibenzothiapyrane, and diphenylene disulfide; aliphatic unsaturated compounds, such as various olefins, dienes, and trienes; and terpene compounds having a double bond.

Examples of the copper deactivator include N-(N,N'-dialkylaminomethyl)triazoles (the alkyl moiety is an alkyl group having 3 to 12 carbon atoms).

### [Physical Properties of Lubricant composition]

Suitable ranges of a 40°C kinetic viscosity, a 100°C kinetic viscosity, and a viscosity index of the lubricant composition are the same as the suitable ranges of the 40°C kinetic viscosity, the 100°C kinetic viscosity, and the viscosity index of the base oil (A) as mentioned above.

From the viewpoints of chemical stability and thermal stability, an acid number of the lubricant composition is preferably 0.05 mgKOH/g or less, more preferably 0.03 mgKOH/g or less, and still more preferably 0.02 mgKOH/g or less. The acid number is measured in conformity with the "indicator titration method" of JIS K2501:2003.

It is preferred that the acid number and a hydroxy value and a volume resistivity as mentioned later are satisfied in a state of new oil, and it is more preferred that they are also satisfied after performing an autoclave test in the section of Examples.

From the viewpoint of stability, a hydroxy value of the lubricant composition is preferably 10 mgKOH/g or less, more preferably 5 mgKOH/g or less, and still more preferably 3 mgKOH/g or less. The hydroxy value is measured in conformity with the "neutralization titration method" of JIS K0070:1992.

A volume resistivity of the lubricant composition is preferably 2.0 × 10⁸ Ω·m or more, more preferably 5.0 × 10⁸ Ω·m or more, and still more preferably 1.0 × 10⁹ Ω·m or more. When the volume resistivity is 2.0 × 10⁸ Ω·m or more, insulating properties of the lubricant composition are enhanced, so that a leakage current likely influencing the action of an apparatus whose driving source is electrically operated, such as an electric vehicle and an electric car-air conditioner, is hardly generated.

A moisture content of the lubricant composition is preferably less than 1,000 ppm, more preferably 300 ppm or less, and still more preferably 150 ppm or less. By making the moisture content low, hydrolysis of the lubricant composition is hardly caused, and the stability of the lubricant composition is enhanced, so that a good lubricating performance can be provided over a long period of time.

### [Application]

According to the invention, the lubricant composition is oil.

### <Composition for refrigerating machines>

A composition for refrigerating machines of the present invention is one containing the aforementioned lubricant composition of the present embodiment and a refrigerant.

### [Refrigerant]

It is preferred to contain, as the refrigerant, at least one selected from a saturated fluorinated hydrocarbon refrigerant having 1 to 3 carbon atoms and an unsaturated fluorinated hydrocarbon refrigerant having 3 carbon atoms.

In particular, in view of the fact that the saturated fluorinated hydrocarbon refrigerant having 1 to 3 carbon atoms is excellent in stability and is hardly decomposed, it is preferred from the standpoint that adverse influences against the fused ring component (B) and the base oil (A) can be suppressed, and it its turn, discoloration with time of the lubricant composition, an increase of acid number of the lubricant composition, formation of sludge based on the lubricant composition, metal corrosion within an apparatus to be caused due to the lubricant composition, degradation with time of the fluorescent performance, and so on can be readily suppressed.

Examples of the saturated fluorinated hydrocarbon refrigerant having 1 to 3 carbon atoms include difluoromethane (R32), 1,1,1,2,2-pentafluoroethane (R125), 1,1,2,2-tetrafluoroethane (R134), 1,1,1,2-tetrafluoroethane (R134a), 1,1,2-trifluoroethane (R143), 1,1,1-trifluoroethane (R143a), 1,1-difluoroethane (R152a), and fluoroethane (R161). Of these, difluoromethane (R32) is preferred, and in particular, a refrigerant made of difluoromethane (R32) alone is preferred.

Examples of the unsaturated fluorinated hydrocarbon refrigerant having 3 carbon atoms include 1,2,3,3,3-pentafluoropropene (R1225ye), 1,3,3,3-tetrafluoropropene (R1234ze), 2,3,3,3-tetrafluoropropene (R1234yf), 1,2,3,3-tetrafluoropropene (R1234ye), and 3,3,3-trifluoropropene (R1243zf). Of these, 2,3,3,3-tetrafluoropropene (R1234yf) is preferred, and in particular, a refrigerant made of 2,3,3,3-tetrafluoropropene (R1234yf) alone is preferred.

The refrigerant may also be a mixed refrigerant containing a saturated fluorinated hydrocarbon refrigerant having 1 to 3 carbon atoms and an unsaturated fluorinated hydrocarbon refrigerant having 3 carbon atoms. In this case, in particular, a mixed refrigerant made of difluoromethane (R32) and 2,3,3,3-tetrafluoropropene (R1234yf) is preferred.

The refrigerant may further contain, in addition to the aforementioned refrigerant (at least one refrigerant selected from a saturated fluorinated hydrocarbon refrigerant having 1 to 3 carbon atoms and an unsaturated fluorinated hydrocarbon refrigerant having 3 carbon atoms), other refrigerant.

Examples of the other refrigerant include a fluorinated ether compound refrigerant, a fluorinated alcohol compound refrigerant, a fluorinated ketone compound refrigerant, and a natural refrigerant.

Examples of the fluorinated ether compound include hexafluorodimethyl ether, pentafluorodimethyl ether, bis(difluoromethyl) ether, fluoromethyl trifluoromethyl ether, trifluoromethyl methyl ether, difluoromethoxypentafluoroethane, 1-trifluoromethoxy-1,2,2,2-tetrafluoroethane, pentafluorooxetane, perfluoro-1,3-dioxolane, various isomers of pentanfluorooxetane, and various isomers of tetrafluorooxetane.

Examples of the fluorinated alcohol compound include monofluoromethyl alcohol, difluoromethyl alcohol, trifluoromethyl alcohol, various isomers of difluoroethyl alcohol, various isomers of trifluoroethyl alcohol, various isomers of tetrafluoroethyl alcohol, pentafluoroethyl alcohol, various isomers of difluoropropyl alcohol, various isomers of trifluoropropyl alcohol, a fluorinated propylene glycol, such as hexafluoropropylene glycol, and a fluorinated trimethylene glycol corresponding to this fluorinated propylene glycol.

Examples of the fluorinated ketone compound include hexafluorodimethyl ketone, pentafluorodimethyl ketone, bis(difluoromethyl) ketone, fluoromethyl trifluoromethyl ketone, trifluoromethyl methyl ketone, perfluoromethyl ethyl ketone, and trifluoromethyl 1,1,2,2-tetrafluoethyl ketone.

Examples of the natural refrigerant include carbon dioxide (carbonic acid gas); hydrocarbons, such as propane, n-butane, isobutane, 2-methylbutane, n-pentane, cyclopentane, isobutane, and normal butane; and ammonia.

A mass ratio of the lubricant composition and the refrigerant in the composition for refrigerating machines [(mass of lubricant composition)/(mass of refrigerant)] is preferably 1/99 to 99/1, more preferably 5/95 to 60/40, and still more preferably 40/60 to 60/40.

### [Refrigerator]

The refrigerator is preferably a compression-type refrigerator. In addition, the compression-type refrigerator compressor is more preferably one having a refrigeration cycle including a condenser, an expansion mechanism (e.g., an expansion valve), and an evaporator, or one having a refrigeration cycle including a compressor, a condenser, an expansion mechanism, a dryer, and an evaporator.

The composition for refrigerating machines is, for example, used for lubricating a sliding portion to be provided in a compressor, etc.

Although the sliding portion is not particularly limited, it is preferred that any of the sliding portions contains a metal, such as iron, and it is preferably one to slide between a metal and a metal.

The refrigerator can be, for example, used for an air conditioner, a gas heat pump (GHP), an air conditioning system, an icebox, a vending machine, a refrigeration system, such as showcase, a hot water system, a heating system, and so on.

### [Physical Properties of Composition for refrigerating machines]

Suitable ranges of an acid number, a hydroxy value, a volume resistivity, and a moisture content of the composition for refrigerating machines are the same as the suitable ranges in the lubricant composition as mentioned above.

### <Method of Detecting Leakage Point>

A method of detecting a leakage point of the present embodiment is one including using the aforementioned lubricant composition of the present embodiment in an apparatus containing a lubricant composition, to detect the presence or absence of leakage of the lubricant composition, etc. based on the presence or absence of light emission of the aforementioned fused ring compound.

Examples of the apparatus containing the lubricant composition include apparatuses containing at least one selected from a refrigerator, a hydraulic mechanism, a bearing, a gear, a turbine, a transmission, a shock absorber, and a motor.

By using the lubricant composition of the present embodiment as the lubricant composition of such an apparatus and irradiating the apparatus with a ultraviolet ray or a visible light ray by a black light, etc., to confirm the light in a visible light region, which the fused ring compound (B) emits, in a portion where the lubricant composition leaks, the leakage portion of the lubricant composition, etc. can be detected.

The confirmation of the light in a visible light region, which the fused ring compound (B) emits, may be performed through visual inspection, or may be performed using an apparatus including a light-receiving element.

In the case where the apparatus is a refrigerator, the detection method of a leakage point of the present embodiment, the aforementioned composition for refrigerating machines of the present embodiment can be used. Specifically, by using the composition for refrigerating machines of the present embodiment as the composition for refrigerating machines of the refrigerator and irradiating the apparatus with a ultraviolet ray or a visible light ray by a black light, etc., to confirm the light in a visible light region, which the fused ring compound (B) emits, in a portion where the lubricant composition leaks, the leakage portion of the composition for refrigerating machines, etc. can be detected.

The confirmation of the light in a visible light region, which the fused ring compound (B) emits, may be performed through visual inspection, or may be performed using an apparatus including a light-receiving element.

### Examples

The present invention is hereunder more specifically described by reference to Examples, but it should be construed that the present invention is by no means limited by these Examples.

### 1. Preparation of Lubricant composition (Composition for refrigerating machines)

Lubricant compositions (composition for refrigerating machines) of Examples 1 to 26 and Comparative Examples 1 to 4 having compositions shown in Tables 1 to 3, respectively were prepared. Examples 1-5,8-11,25 and 26 are not according to present invention.

### 2. Evaluation

### 2-1. Stability

With respect to the lubricant compositions (composition for refrigerating machines) of Examples 1 to 26 and Comparative Examples 1 to 4, an autoclave test was performed under the following condition, and an appearance of oil (color of oil observed through visual inspection), an appearance of catalyst (color of catalyst observed through visual inspection), the presence or absence of sludge, and an acid number of oil were then evaluated or measured. The acid number was measured in conformity with the "indicator titration method" of JIS K2501:2003. The results are shown in Tables 1 to 3. In Tables 1 to 3, the matter that the appearance of oil is good and the matter that the appearance of catalyst is good indicate that the color does not change on the whole before and after the evaluation.

### <Autoclave Test>

An autoclave having an internal volume of 200 mL was enclosed with 60 g of the composition for refrigerating machines of each of Examples 1 to 26 and Comparative Examples 1 to 4 (moisture in the composition: 500 ppm by mass) and a metal catalyst composed of iron, copper, and aluminum and then evacuated (residual amount of air: 25 mL), followed by holding under a condition at a temperature 175°C for 336 hours.

Details of the materials used in Tables 1 to 3 are as follows.

### <Base Oil (A)>

· Base oil A:
   Polyvinyl ether (polyethyl vinyl ether, 40°C kinetic viscosity: 67.5 mm²/s, 100°C kinetic viscosity: 8.03 mm²/s, viscosity index: 81)
· Base oil B:
   Polyol ester (hindered ester of a mixed polyol of pentaerythritol and dipentaerythritol (mass ratio: 5/1) with a mixed fatty acid of 2-ethylhexanoic acid and 3,5,5-trimethylhexanoic acid (mass ratio: 9/10), 40°C kinetic viscosity: 88.33 mm²/s, 100°C kinetic viscosity: 9.60 mm²/s, viscosity index: 91)
· Base oil C (not according to the invention) :
   Polyalkylene glycol (polypropylene glycol dimethyl ether, 40°C kinetic viscosity: 39.2 mm²/s, 100°C kinetic viscosity: 8.65 mm²/s, viscosity index: 208)

### <Fused Ring Compound (B)>

· Fluorescent compound A (not according to the invention) :
   Perylene
· Fluorescent compound B:
   5,6,11,12-Tetraphenylnaphthacene
· Fluorescent compound C:
   9-Phenylanthracene
· Fluorescent compound D:
   9,10-Diphenylanthracene
· Fluorescent compound E:
   9,9'-Bianthracene
· Fluorescent compound F: Anthracene

### <Other Fluorescent Compound>

· Fluorescent compound G:
   2-(4-tert-Butylphenyl)-5-(4-biphenylyl)-1,3,4-oxadiazole

### <Additives>

- Antioxidant:
   2,6-Di-tert-butyl-4-methylphenol
- Extreme pressure agent:
   Tricresyl phosphate
- Acid scavenger:
   2-Ethylhexyl glycidyl ether

### <Refrigerant>

Difluoromethane (R32)

### <Coloring Agent>

- Coloring agent A:
   Solvent Yellow 116 (oil-soluble yellow dye, active ingredient: 10% by mass)
- Coloring agent B:
   Solvent Green 20 (oil-soluble green dye, active ingredient: 10% by mass)
- Coloring agent C:
   Solvent Blue 35 (oil-soluble blue dye, active ingredient: 10% by mass)
- Coloring agent D:
   Solvent Red 207 (oil-soluble red dye, active ingredient: 10% by mass)

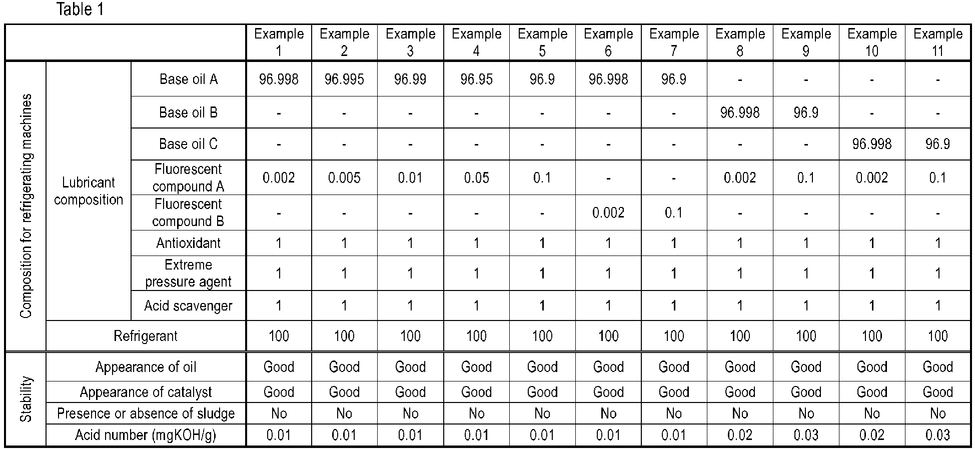

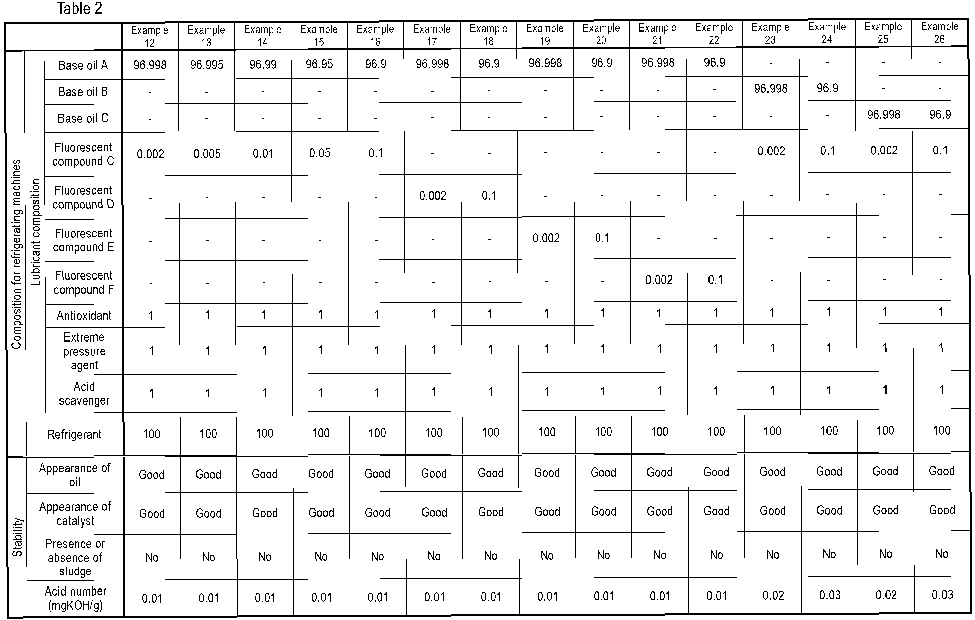

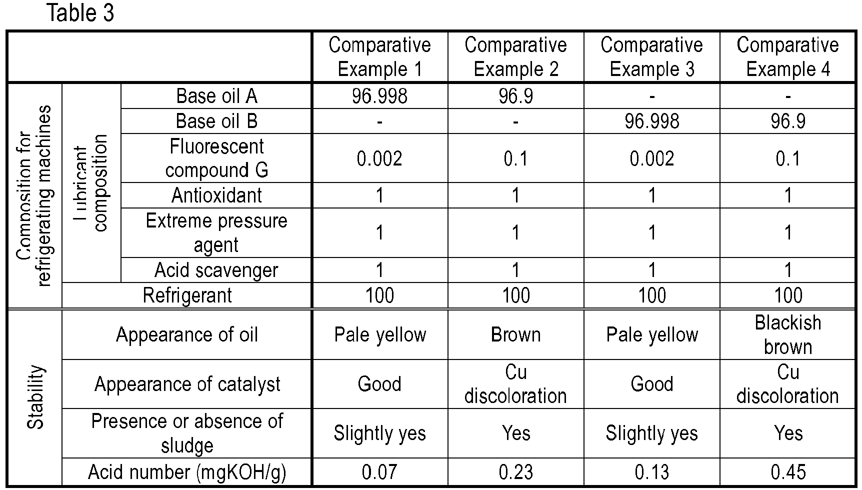

From the results of Tables 1 to 3, it can be confirmed that the lubricant compositions (composition for refrigerating machines) of Examples 1 to 26 are able to suppress discoloration with time, an increase of acid number, formation of sludge, and metal corrosion within an apparatus. In addition, though the evaluation is not made in the tables, the lubricant compositions (composition for refrigerating machines) of Examples 1 to 26 were ones which have a satisfactory fluorescent performance even after the autoclave test.

On the other hand, the lubricant compositions (composition for refrigerating machines) of Comparative Examples 1 to 4 were ones unable to suppress discoloration with time, an increase of acid number, formation of sludge, and metal corrosion within an apparatus. In addition, though the evaluation is not made in the tables, in the lubricant compositions (composition for refrigerating machines) of Comparative Examples 1 to 4, the fluorescent performance after the autoclave test was worsened, so that they were ones which are difficult to detect a leakage point over a long period of time.

### 3. Preparation and Evaluation of Lubricant compositions (Composition for refrigerating machines) Containing Coloring Agent

Lubricant compositions (composition for refrigerating machines) of Examples and Comparative Examples having compositions shown in Table 4, respectively were prepared. Examples 29,33 and 36 are not according to present invention.

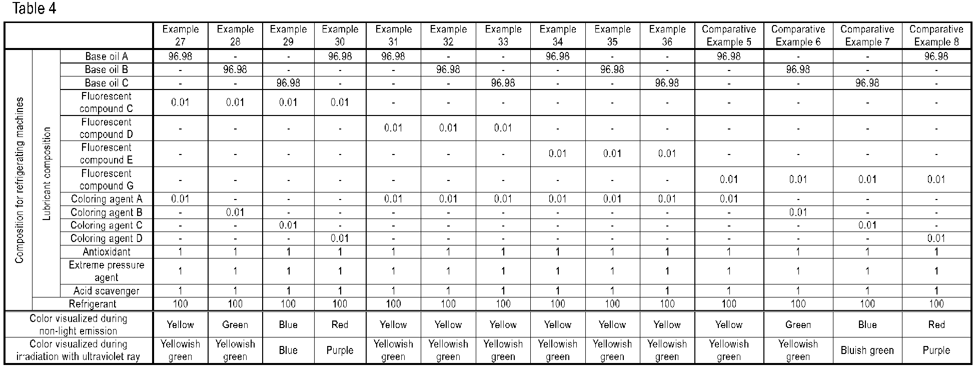

The composition for refrigerating machines of Examples 27 to 36 and the composition for refrigerating machines of Comparative Examples 5 to 8 were subjected to the same autoclave test as in the above 2. As a result, it could be confirmed that the composition for refrigerating machines of Examples 27 to 36 are able to suppress discoloration with time, an increase of acid number, formation of sludge, and metal corrosion within an apparatus, as compared with the composition for refrigerating machines of Comparative Examples 5 to 8.

In addition, in the composition for refrigerating machines of Examples 27 to 36, the composition for refrigerating machines could be colored even during non-light emission of the fused ring compound (B), and furthermore, by synthesizing an emission color of the fused ring compound (B) with a color of the coloring agent, the color visualized during light emission was a color (purple to yellow) which is readily visualized in a dark place.

## Claims

1. A composition for refrigerating machines comprising a refrigerant (D) and a lubricant composition, wherein the lubricant composition comprises
a base oil (A) which is at least one selected from the group consisting of a polyvinyl ether and a polyol ester and
a fluorescent fused ring compound (B) being fluorescent, having a tri- or higher fused ring, and not having nitrogen, oxygen, and sulfur in a molecule thereof, wherein the fused ring compound (B) is at least one selected from the group consisting of a naphthacene-based compound and an anthracene-based compound; and
at least one additive selected from the group consisting of an antioxidant, an extreme pressure agent, an acid scavenger, an oxygen scavenger, and a copper deactivator;
wherein the fused ring compound (B) is contained in an amount of 0.001 to 1.0% by mass on a basis of the whole amount of the lubricant composition.

2. The composition for refrigerating machines according to claim 1, wherein the lubricant composition further comprises a coloring agent (C).

3. The composition for refrigerating machines according to claim 1, wherein the refrigerant (D) contains at least one selected from a saturated fluorinated hydrocarbon refrigerant having 1 to 3 carbon atoms and an unsaturated fluorinated hydrocarbon refrigerant having 3 carbon atoms.

4. Use of a lubricant composition comprising
a base oil (A) which is at least one selected from the group consisting of a polyvinyl ether and a polyol ester and
a fluorescent fused ring compound (B) being fluorescent, having a tri- or higher fused ring, and not having nitrogen, oxygen, and sulfur in a molecule thereof, wherein the fused ring compound (B) is at least one selected from the group consisting of a naphthacene-based compound and an anthracene-based compound; and
at least one additive selected from the group consisting of an antioxidant, an extreme pressure agent, an acid scavenger, an oxygen scavenger, and a copper deactivator;
wherein the fused ring compound (B) is contained in an amount of 0.001 to 1.0% by mass on a basis of the whole amount of the lubricant composition, for a refrigerator oil.

5. A method of detecting a leakage point in an apparatus which includes the composition for refrigerating machines according to any one of claims 1 to 4, wherein UV ray or visible light ray is irradiated to judge the presence or absence of leakage of the composition based on the presence or absence of light emission of the fused ring compound (B).

## Patentansprüche

1. Zusammensetzung für Kältemaschinen umfassend ein Kältemittel (D) und eine Schmiermittelzusammensetzung, wobei die Schmiermittelzusammensetzung umfasst
ein Basisöl (A), das mindestens eines, ausgewählt aus der Gruppe, bestehend aus einem Polyvinylether und einem Polyolester ist und
eine fluoreszierende kondensierte Ringverbindung (B), die fluoreszierend ist, die einen Tri- oder höheren kondensierten Ring aufweist, und keinen Stickstoff, Sauerstoff und Schwefel in einem Molekül davon aufweist, wobei die kondensierte Ringverbindung (B) mindestens eine ist, ausgewählt aus der Gruppe, bestehend aus einer Verbindung auf Naphthacenbasis und einer Verbindung auf Anthracenbasis; und
mindestens ein Additiv, ausgewählt aus der Gruppe, bestehend aus einem Antioxidationsmittel, einem Hochdruckmittel, einem Säurefänger, einem Sauerstofffänger und einem Kupfer-Deaktivator;
wobei die kondensierte Ringverbindung (B) in einer Menge von 0,001 bis 1,0 Massen-%, auf Basis der Gesamtmenge der Schmiermittelzusammensetzung, enthalten ist.

2. Zusammensetzung für Kältemaschinen gemäß Anspruch 1, wobei die Schmiermittelzusammensetzung ferner ein Färbemittel (C) umfasst.

3. Zusammensetzung für Kältemaschinen gemäß Anspruch 1, wobei das Kältemittel (D) mindestens einen, ausgewählt aus einem gesättigtem fluorierten Kohlenwasserstoff-Kältemittel mit 1 bis 3 Kohlenstoffatomen und einem ungesättigtem fluorierten Kohlenwasserstoff-Kältemittel mit 3 Kohlenstoffatomen, enthält.

4. Verwendung einer Schmiermittelzusammensetzung umfassend
ein Basisöl (A), das mindestens eines, ausgewählt aus der Gruppe, bestehend aus einem Polyvinylether und einem Polyolester ist und
eine fluoreszierende kondensierte Ringverbindung (B), die fluoreszierend ist, die einen Tri- oder höheren kondensierten Ring aufweist, und keinen Stickstoff, Sauerstoff und Schwefel in einem Molekül davon aufweist, wobei die kondensierte Ringverbindung (B) mindestens eine ist, ausgewählt aus der Gruppe, bestehend aus einer Verbindung auf Naphthacenbasis und einer Verbindung auf Anthracenbasis; und
mindestens ein Additiv, ausgewählt aus der Gruppe, bestehend aus einem Antioxidationsmittel, einem Hochdruckmittel, einem Säurefänger, einem Sauerstofffänger und einem Kupfer-Desaktivator;
wobei die kondensierte Ringverbindung (B) in einer Menge von 0,001 bis 1,0 Massen-%, auf Basis der Gesamtmenge der Schmiermittelzusammensetzung, enthalten ist, für ein Kältemaschinenöl.

5. Verfahren zur Detektion einer Leckage in einer Vorrichtung, die die Zusammensetzung für Kältemaschinen gemäß mindestens einem der Ansprüche 1 bis 4 enthält, wobei UV-Strahlung oder sichtbare Lichtstrahlung eingestrahlt wird, um das Vorhandensein oder Nichtvorhandensein einer Leckage der Zusammensetzung, basierend auf das Vorhandensein oder Nichtvorhandensein von Lichtemission der kondensierten Ringverbindung (B), zu beurteilen.

## Revendications

1. Composition pour machines frigorifiques comprenant un réfrigérant (D) et une composition lubrifiante, dans laquelle la composition lubrifiante comprend
une huile de base (A) qui est au moins un sélectionné à partir du groupe consistant en un éther polyvinylique et un ester de polyol et
un composé cyclique fusionné fluorescent (B) qui est fluorescent, présentant trois cycles fusionnés ou plus, et ne présentant ni azote, ni oxygène ni soufre dans une molécule de celui-ci, dans laquelle le composé cyclique fusionné (B) est au moins un sélectionné à partir du groupe consistant en un composé à base de naphtacène et un composé à base d'anthracène ; et
au moins un additif sélectionné à partir du groupe consistant en un antioxydant, un agent de pression extrême, un éliminateur d'acide, un éliminateur d'oxygène et un désactivateur de cuivre ;
dans laquelle le composé cyclique fusionné (B) est contenu en une quantité de 0,001 à 1,0 % en masse sur une base de la quantité totale de la composition lubrifiante.

2. Composition pour machines frigorifiques selon la revendication 1, dans laquelle la composition lubrifiante comprend en outre un agent de coloration (C).

3. Composition pour machines frigorifiques selon la revendication 1, dans laquelle le réfrigérant (D) contient au moins un sélectionné parmi un réfrigérant d'hydrocarbures fluorés saturés présentant 1 à 3 atomes de carbone et un réfrigérant d'hydrocarbures fluorés insaturés présentant 3 atomes de carbone.

4. Utilisation d'une composition lubrifiante comprenant
une huile de base (A) qui est au moins un sélectionné à partir du groupe consistant en un éther polyvinylique et un ester de polyol et
un composé cyclique fusionné fluorescent (B) qui est fluorescent, présentant trois cycles fusionnés ou plus, et ne présentant ni azote, ni oxygène ni soufre dans une molécule de celui-ci, dans laquelle le composé cyclique fusionné (B) est au moins un sélectionné à partir du groupe consistant en un composé à base de naphtacène et un composé à base d'anthracène ; et
au moins un additif sélectionné à partir du groupe consistant en un antioxydant, un agent de pression extrême, un éliminateur d'acide, un éliminateur d'oxygène et un désactivateur de cuivre ;
dans laquelle le composé cyclique fusionné (B) est contenu en une quantité de 0,001 à 1,0 % en masse sur une base de la quantité totale de la composition lubrifiante, pour une huile de réfrigérateur.

5. Procédé de détection d'un point de fuite dans un appareil qui inclut la composition pour machines frigorifiques selon l'une quelconque des revendications 1 à 4, dans lequel un rayon UV ou un rayon de lumière visible est irradié pour juger de la présence ou absence de fuite de la composition sur la base de la présence ou absence d'émission de lumière du composé cyclique fusionné (B).
